# EUROPEAN PATENT APPLICATION

(11) **EP 4 650 135 A2**
(43) Date of publication of application: **19.11.2025**
(21) Application number: 25176202.7
(22) Date of filing: 13.05.2025
(51) Int. Cl.: B29B 17/02, B03B 9/06, B09B 3/30, B09B 3/32, B09B 3/35, B29L 31/48, B09B 101/75

(54) **HELMET RECYCLING METHOD AND HELMET DISASSEMBLY DEVICE INCLUDING A DISASSEMBLY MECHANISM**

(30) Priority: 13.05.2024 CN 202410590094; 13.05.2024 CN 202421034283 U
(71) Applicant: Strategic Sports Limited, Kowloon, Hong Kong (CN); Jianning Technology Development Co., Ltd., TST KLN (HK); Dongguan Startegic Sports Co Ltd, Dongguan City Guangdong (CN)
(72) Inventor: XU, Yuyao, Dongguan City Guangdong Province (CN); SHENG, Fangfang, Dongguan City Guangdong Province (CN); HUANG, Peijian, Dongguan City Guangdong Province (CN); ZHOU, Yiping, Dongguan City Guangdong Province (CN); ZOU, Jinglin, Dongguan City Guangdong Province (CN); XIE, Liang, Dongguan City Guangdong Province (CN); LONG, Zhiyan, Dongguan City Guangdong Province (CN)
(74) Representative: Impact Intellectual Property LLP

(57) **Abstract**

An automated helmet disassembly device, and its helmet recycling method include a first conveyor belt, an optional identification mechanism; a control system, a disassembly mechanism, a separation mechanism, and a second conveyor belt to disassemble a helmet into its helmet components. A disassembly mechanism is also provided herein.

## Description

### FIELD OF THE INVENTION

The present invention relates to the field of helmet recycling. More specifically, it relates to methods and devices for recycling helmets, and a disassembly mechanism as part of the device and for use in such a process.

### BACKGROUND

Helmets are essential safety equipment that can protect the head from accidents and injuries. A helmet usually consists of a sturdy shell and an energy-absorbing cushion and other components, which can help reduce the severity of injuries. Helmets offer protection during sports such as cycling, skiing, skateboarding, American football, rugby, and other recreational activities; dangerous work such as construction, durian cultivation, police, military, first responder, fire prevention, and the like. For safety reasons, helmets are typically formed from multiple materials including plastic, foam, and metal incorporated into a hard outer shell, the cushion, chin straps, and other components. These components are typically closely attached and/or bonded to each other, making the disassembly and recycling of helmets relatively complex.

The widespread use of helmets results in an increasing number of discarded helmets; however, these helmets still contain useful raw materials which could be recycled if successfully separated. Unfortunately, current manual helmet recycling is extremely labor intensive and therefore uneconomical on a large scale. Thus, traditional discarded and broken helmet disposal methods include incineration and disposal in landfills, which are not only inefficient, but also may cause irreversible or long-term negative environmental effects.

Accordingly, there remains a need to reduce the negative impact of discarded helmets to the environment. While manual disassembly may be possible in some instances, it can be very labor intensive and inefficient. Therefore, there also remains a need for automated equipment to disassemble discarded helmets. There also remains a need for improved equipment to disassemble, and methods for disassembling, discarded helmets. There also remains a need for equipment and methods for disassembling discarded helmets to allow various helmet components to be recycled.

### SUMMARY OF THE INVENTION

An embodiment of the present invention relates to an automated disassembly and recycling device containing a first conveyor belt having an upstream end and a downstream end. The downstream end is distal to the upstream end. The first conveyor belt contains a chin strap disassembly station, a liner disassembly station, an adjuster disassembly station, and a rivet disassembly station. A control system is operatively connected to and receives data from the chin strap disassembly station, the liner disassembly station, the adjuster disassembly station, the rivet disassembly station and the identification mechanism. The chin strap disassembly station located towards the upstream end of the first conveyor belt contains a first manipulator to cut the chin strap of a helmet. The liner disassembly station has a second manipulator, the adjuster disassembly station has a third manipulator to grab the helmet adjusters, and the rivet disassembly station has a fourth manipulator to separate rivets from helmets.

A disassembly mechanism is located downstream of the rivet disassembly station and includes a loading end at the downstream end of the first conveyor belt. The disassembly mechanism has a cutting mechanism, a pressing mechanism and a pushing mechanism. A separation mechanism having a downstream end is arranged downstream of the disassembly mechanism, and separates the helmet components.

The automated helmet disassembly device contains a second conveyor belt downstream from the separation mechanism to transport helmet components from the downstream end of the separation mechanism.

Another embodiment of the invention relates to a helmet recycling method employing the automated helmet disassembly device herein.

In another embodiment of the invention, a disassembly mechanism has a frame containing a disassembly platform securely affixed to the middle portion of the frame. A first hydraulic cylinder is affixed to the upper portion of the frame and the hydraulic cylinder's output end is aligned towards the disassembly platform. The first hydraulic cylinder is securely affixed to a connecting rack containing a blade affixed to a bottom portion of the connecting rack. A second hydraulic cylinder is affixed to the connecting rack and is arranged below the first hydraulic cylinder. The second hydraulic cylinder's output end is aligned towards the disassembly platform and contains a press plate. During use, the press plate may protrude from a connecting rack hole.

Without intending to be limited by theory, it is believed that the present invention enables efficient helmet recycling by providing an automated disassembly line to load and identify discarded helmets, disassemble and separate various helmet components such as the liner, the cushion, the straps, the rivets, etc., as well as classify and recycle different materials, thereby improving the efficiency of disassembling helmets. This in turn promotes the recycling and utilization of helmet components so as to help realize a circular economy and promote the sustainable development of the helmet industry.

Without intending to be limited by theory, it is believed that the present invention may address existing issues of existing recycling methods, such as labor-intensive and slow manual disassembly and low efficiency to achieve the automated disassembly of helmets, and improve the efficiency of recycling helmet components.

### BRIEF DESCRIPTION OF THE DRAWINGS

Fig. 1 shows a schematic diagram of an embodiment of an automated helmet disassembly device as described herein;
Fig. 2 shows a schematic diagram of an embodiment of the disassembly mechanism;
Fig. 3 shows a schematic diagram of an embodiment of a disassembly platform;
Fig. 4 shows a bottom perspective view of an embodiment of the connecting rack;
Fig. 5 shows a flowchart of an embodiment of a helmet recycling method as described herein; and
Fig. 6 shows a partial schematic diagram of an embodiment of the disassembly platform.

The figures herein are for illustrative purposes only and are not necessarily drawn to scale.

### DESCRIPTION OF THE PREFERRED EMBODIMENTS

Unless otherwise specifically provided, measurements are made in metric units and all percentages, ratios, etc. herein are by weight, unless specifically indicated otherwise.

As used herein, the term "downstream" indicates a direction in the method and/or device going from a helmet as a single piece towards creating a disassembled helmet such as separated into separate helmet components, etc. As used herein the term "upstream" indicates a direction the opposite of downstream in the device and/or method herein; i.e., in a direction from the (disassembled) helmet components and towards the helmet as a substantially single piece.

This invention may use an automated disassembly line to load and identify discarded helmets, disassemble and separate various helmet components from the cushion and other components, as well as classify and recycle different materials, thereby improving the efficiency of disassembling helmets, promoting recycling and utilization of discarded helmet components and realizing a circular economy and sustainable development of the helmet industry.

An embodiment of the present invention provides an automated helmet disassembly device, as well as its helmet recycling method to solve the afore-mentioned issues. Furthermore, the invention may provide various methods and devices for disassembling a helmet, or a discarded helmet, into helmet components (i.e., the helmet's component parts) so as to allow recycling of one or more of the helmet components.

According to an aspect of the invention, an automated helmet disassembly device and process contains a first conveyor belt with an upstream end and a downstream end distal to the upstream end. The helmet disassembly device contains a chin strap disassembly station and a first manipulator at the start of the first conveyor belt to cut the chin straps of helmets. The first manipulator may contain a first grabber to hold onto the helmet and/or a chin strap; or to hold onto a chin strap. The first manipulator may also contain a cutter to separate the chin strap from the helmet.

The automated helmet disassembly device also contains a liner disassembly station proximal to and downstream from the chin strap disassembly station. The liner disassembly station contains a second manipulator, which may contain a second grabber. The liner disassembly station is installed next to and downstream from the chin strap disassembly station to separate the liner from the helmets. The liner disassembly station contains a second manipulator, typically containing a second grabber, to remove the liner from the helmet.

An adjuster disassembly station is located proximal to and downstream from the liner disassembly station and contains a third manipulator, typically further containing a third grabber, which is used to grab and remove any helmet adjusters.

The device also contains a rivet disassembly station having a fourth manipulator, typically containing a fourth grabber and a cutter, to separate rivets from helmets. The rivet disassembly station is downstream of the adjuster disassembly station.

The various mechanisms and stations herein may further contain additional manipulators, grabbers, cutters, etc. as desired. Furthermore, the manipulators, cutters, and grabbers herein may contain one or more sensors such as a visual sensor so as to make their actions more accurate and precise. Such manipulators, grabbers, and cutters may be, for example, robotic arms or parts thereof.

In addition, an optional identification mechanism may be installed at the upstream end of the first conveyor belt to collect helmet data, i.e., data about the helmets to be disassembled. Such helmet data may include, for example, the shape, the air vent structure, identifying marks, trademarks, the construction details, the maker, the style, the type, the model, the material(s), the alignment, the positioning, the order, the number, etc. of the helmets that are placed on the first conveyor belt. In an embodiment herein, the identification mechanism comprises a visual sensor, which is set at the upstream (i.e., front) end of the first conveyor belt. The input end of the visual sensor is positioned in the direction of the first conveyor belt so as to be able to see the helmets placed on, or passing down the first conveyor belt. The visual sensor may collect helmet data and then send the helmet data to, for example, the control system. In an embodiment herein, the identification mechanism may include a radio wave sensor, for example, an RFID sensor, a NFC sensor, etc. if such technologies are built into the helmets to identify them.

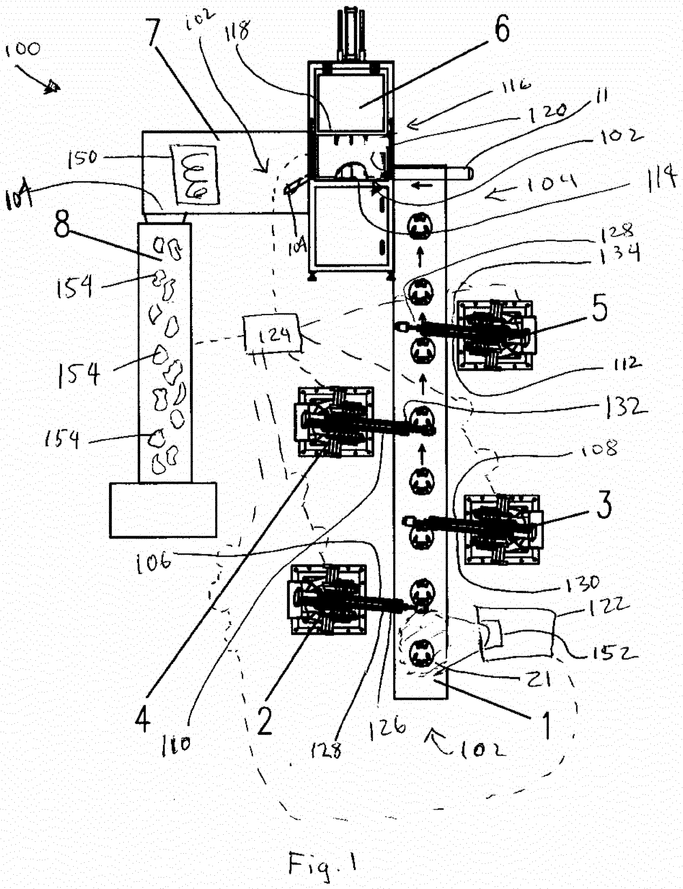

A control system may be connected to the chin strap disassembly station, liner disassembly station, adjuster disassembly station, rivet disassembly station, identification mechanism, disassembly mechanism, safety sensor(s), separation mechanism, second conveyor belt, etc. as indicated by the dashed lines in Fig. 1. The control system may send and/or receive signals to these stations/mechanisms via any known technology and be physically connected via wires, or may send data wirelessly via, for example, WiFi^{™}, Bluetooth^{™}, a network, etc.

A disassembly mechanism with a loading end is fixed downstream of the rivet disassembly station. The disassembly mechanism separates the helmet components by cutting the helmet, pressing the pieces, and pushing the helmet components into the separation mechanism. In an embodiment herein, the disassembly mechanism includes a frame, a disassembly platform in the middle of the frame, a loading end on the upstream end of the disassembly platform, and an unloading end on the downstream side of the disassembly platform.

The disassembly mechanism contains a loading end at the downstream end of the first conveyor belt and further contains a cutting mechanism, a pressing mechanism and a pushing mechanism. In an embodiment herein, the downstream end of the disassembly mechanism contains an unloading chute, and the separation mechanism is operatively connected to the unloading chute so as to receive the helmet components from the disassembly mechanism.

The cutting mechanism is designed to cut the helmet into at least two helmet pieces; or a plurality of helmet pieces; or at least four helmet pieces; or four helmet pieces. The cutting mechanism may include a first hydraulic cylinder, a connecting rack and at least one blade; or a plurality of blades; or four blades. The first hydraulic cylinder may be set at the upper portion of the frame, and the output end of the first hydraulic cylinder may be perpendicular to the disassembly platform. A connecting rack may be fixed at the output end of the first hydraulic cylinder, while the blade(s) is/are fitted at the bottom of the connecting rack.

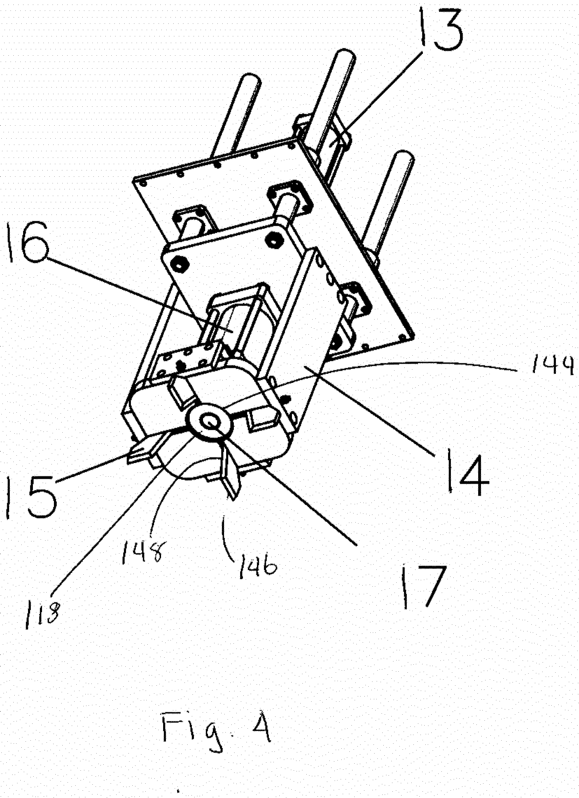

In an embodiment herein, four blades are uniformly distributed at the bottom of the connecting rack and arranged at 90 degree angles. See, for example, Fig. 4 at 15. The blades' lower edges may be positioned in a horizontal direction, while the inner edges are set in an inclined position (see Fig. 4 at 15). The disassembly platform may have four slots corresponding to the four blades, allowing the blades to pass through the disassembly platform. This allows the blades to, for example, cut the helmet into 4 or more helmet pieces without damaging the disassembly platform during cutting or pressing.

Once the helmet is cut into helmet pieces, the pressing mechanism presses the helmet pieces against the disassembling platform so as to further to break up the helmet pieces into helmet components. Moreover, the pressing mechanism may include a second hydraulic cylinder and press plate. The second hydraulic cylinder is fixed on the connecting rack, and the output/downstream end of the second hydraulic cylinder may be perpendicular to the disassembly platform. The connecting rack is provided with a connecting rack hole for the press plate to pass through (see Fig. 4), and the press plate is set at the downstream end of the second hydraulic cylinder. Without intending to be limited by theory it is believed that the pressing mechanism may force the different helmet components to separate from each other due to their different hardnesses and different flexibilities. As the curved pieces are pressed, then it is believed that this may force the helmet components to break apart and separate from each other, even if, for example, they were bonded with an adhesive. Once the pressing mechanism is finished, then the second hydraulic cylinder and/or the first hydraulic cylinder resets and raise to the upper portion of the frame so as to release the helmet components and prepare for the next helmet.

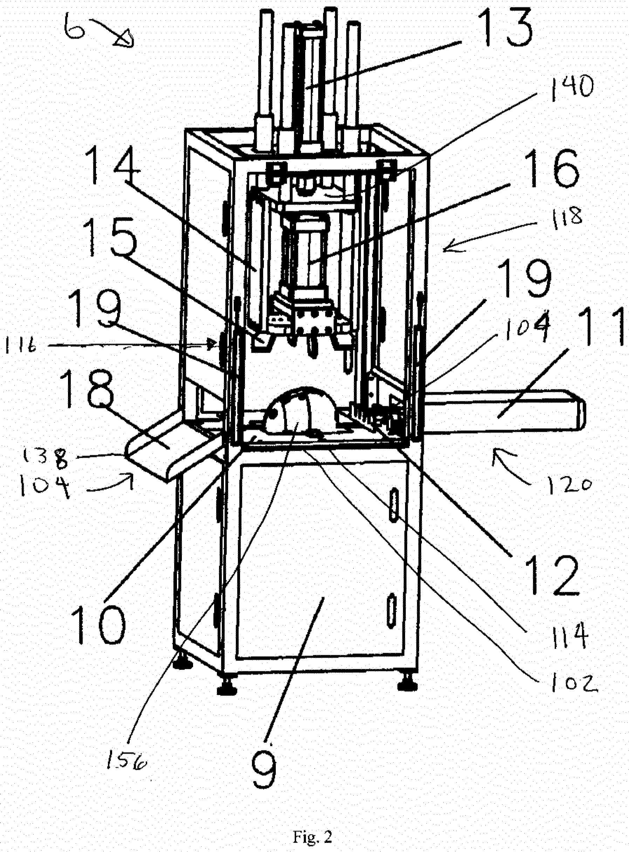

The pushing mechanism then activates the pneumatic cylinder to push the helmet components to the unloading end of the disassembly mechanism, typically towards the unloading chute and/or the output end. The pushing mechanism may include a pneumatic cylinder and a push plate, although other arrangements would be understood by those skilled in the art. Depending on the alignment of the loading and unloading ends of the disassembly platform, the pneumatic cylinder may be fitted on the upstream (i.e., loading) side of the disassembly platform. In another embodiment, as shown in Fig. 2, the pneumatic cylinder is arranged at a 90 degree angle to the loading end. The push plate is typically affixed at the downstream (i.e., the output) end of the pneumatic cylinder, as the downstream end of the pneumatic cylinder typically moves towards the downstream (i.e., unloading) end of the disassembly mechanism.

In an embodiment herein, the loading end of the disassembly mechanism is provided with a safety sensor, which is connected to the cutting mechanism, the pressing mechanism and the pushing mechanism via the control system. Without intending to be limited by theory it is believed that should, for example, an operator's hand trigger the safety sensor, then the control system will stop the disassembly mechanism, including the cutting mechanism, the pressing mechanism and the pushing mechanism, so as to protect the worker's safety and prevent injury. In short, the safety sensor may only allow the disassembly mechanism to work when no unwanted obstructions or safety issues are detected. In an embodiment herein, the safety sensor is an electric eye, an infrared sensor, or other light-based sensor which senses when an object breaks the plane of the loading end. In an embodiment herein the safety sensor emits an infrared beam to form a grating area. If the infrared beam is not obstructed, the surrounding environment is considered safe, and the disassembly mechanism may operate normally. Alternatively, if some parts of the infrared beam are obstructed, then the safety sensor will notify the control system which will stop the disassembly mechanism from functioning so as to prevent accidents and ensure the safety of operators. The control system and/or the disassembly mechanism may be either a positive feedback or a negative feedback system as desired. Alternatively, the safety-sensor may be a sonic sensor, a motion sensor, a contact sensor (e.g., if the loading end is closed off by a see-through window or door), and/or other sensors known in the art.

A separation mechanism is set at the downstream (i.e., unloading) end of the disassembly mechanism, and is used to separate the shell from the cushion and other helmet components. In an embodiment herein, the separation mechanism comprises a rotational device such as a drum separator, or even a vertical mixer (a.k.a., a cyclone device) similar to those found in bagless vacuum cleaners to separate the helmet components via density. In an embodiment of the invention, the separation mechanism employs a physical screening method, for example, size screening, to separate the helmet components into similar raw materials.

A second conveyor belt is operatively connected to the separation mechanism and is used to transport shells, cushions and other helmet components (including waste). Additional separation and helmet component and raw material classification may occur via the second conveyor belt. Such additional separation may be manual, or automated as desired.

### RECYCLING METHOD

An embodiment of the helmet recycling method for the automated helmet disassembly device described herein comprises the steps of:
S1. Placing the helmets in need of recycling, preferably one-by-one (rather than jumbled together), at the upstream end (i.e., start) of the first conveyor belt (1). Such helmet placing may be done automatically via, for example, a sorting mechanism, or manually, as desired. The helmets may be in any orientation; or in a similar orientation such as with the concave helmet opening facing downwards; or with the concave helmet opening facing upwards; or substantially in the same orientation, or a combination thereof. See the embodiment of Fig. 1, where the helmets are placed one-by-one on the conveyor belt in the same orientation, and with the concave helmet opening facing upwards. In an embodiment herein the helmets are placed with the concave helmet opening facing upwards, so as to allow the first manipulator at the chin strap disassembly station to grab the chin strap(s).
S2. collecting helmet data by the identification mechanism from the helmet on the first conveyor belt and transmitting the helmet data to the control system. The helmet data may, for example, identify the helmet on the first conveyor belt (1) (preferably one-by-one), and sends information of each helmet's model, position and direction to the control system.
S3. Cutting the chin strap at the chin strap disassembly station (2). Typically, the first grabber will grab the chin strap which is then cut by the cutter.
S4. Separating the liner from the helmet at the liner disassembly station (3) by grabbing and separating liner from the helmet. Typically, the second grabber will grab the liner and separate it from the helmet by pulling it out.
S5. Separating the adjuster at the adjuster disassembly station (4) by grabbing and separating the adjuster(s) from the helmet. Typically, the third grabber will grab the adjuster and separate it from the helmet.
S6. Removing the rivet(s) at the rivet disassembly station (5) which typically removes the helmet rivet(s) by cutting them off with a cutter. This step may be omitted if the identification mechanism does not detect the existence of rivets on that particular helmet; in which case the rivet disassembly station may pause as the helmet proceeds to Step S7;
S7. Placing the helmet into the disassembly mechanism (6) either automatically or manually. Cutting the helmet with the cutting mechanism into helmet pieces, pressing the helmet pieces with the pressing mechanism to break their shells, padding/cushion and other parts into helmet components, and finally, pushing the helmet components with the pushing mechanism into the separation mechanism (7).
S8. Rotating the helmet components in the separation mechanism (7) to separate the helmet components so as to easier categorize them for recycling. The separation mechanism may rotate the helmet components at a high speed, such as in a vertical (a.k.a. cyclone mixer such as seen in bagless vacuums) or employ any other known separation methods known in the art, so as to separate the shell from the cushion and other helmet components by density, size, weight, etc.
S9. Sorting the helmet components (including separated shells, cushions, waste, etc.) on the second conveyor belt (8) either manually or automatically for recycling.

### FIGURES

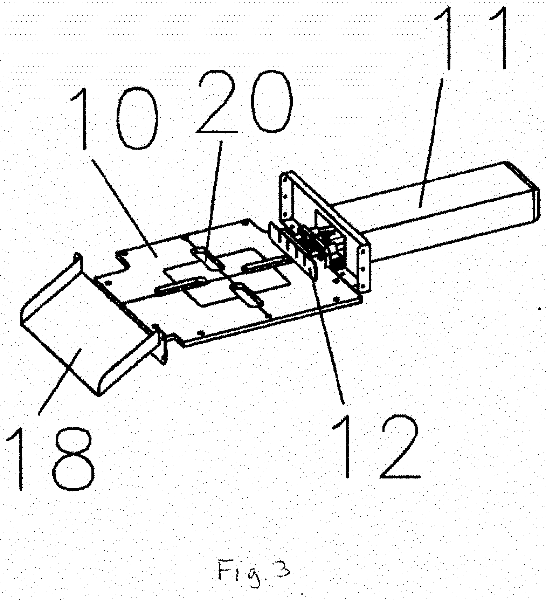

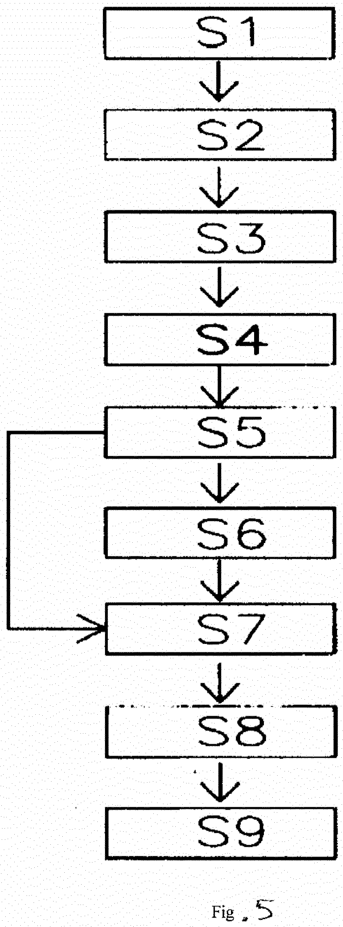

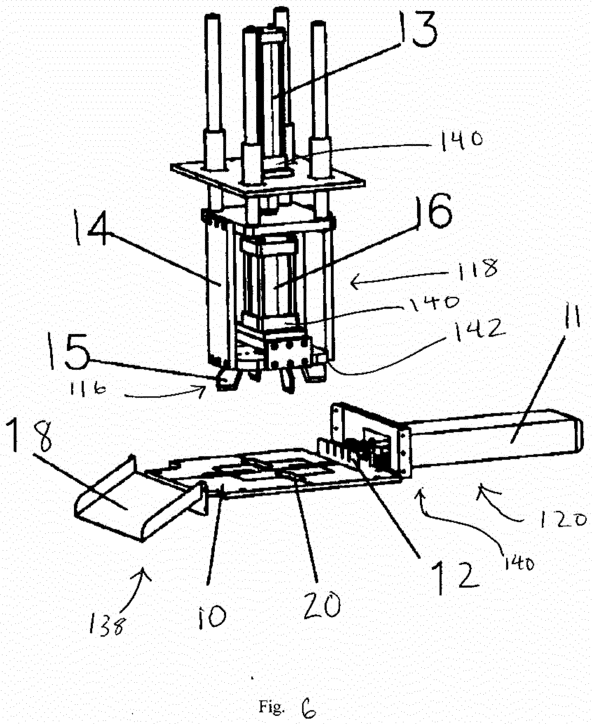

With reference to Figs. 1-6, an embodiment herein relates to an automated helmet disassembly device (100), which includes a first conveyor belt (1) containing a chin strap disassembly station (2) used to cut the chin strap(s) from the helmet (21). The chin strap disassembly station (2) is placed towards the upstream end of the first conveyor belt (1). The chin strap disassembly station (1) contains a first manipulator (106) which may contain a first grabber (126) and a cutter (128). It also contains a liner disassembly station (3) with a second manipulator (108) and is installed downstream to the chin strap disassembly station (2). The liner disassembly station (3) separates the liners from the helmet. (21)

An adjuster disassembly station (4), downstream from the liner disassembly station (3), contains a third manipulator (110), with a third grabber (132) with which to grab any helmet adjusters from the helmet (21). A rivet disassembly station (5) is downstream of the liner disassembly station (3) and contains a fourth manipulator (112). The fourth manipulator may contain a fourth grabber and a cutter with which to grab the helmet (21) and separate; or cut, the rivet(s) from the helmet (21), respectively.

A disassembly mechanism (6) with a loading end is fixed at the downstream end (104) of the first conveyor belt (1), and contains a cutting mechanism (116), a pressing mechanism (118) and a pushing mechanism (120) to break up the helmet (21) into helmet pieces and eventually helmet components (154). A separation mechanism (7) is operatively connected to the unloading end (138) of the disassembly mechanism (6), and is used to separate the shell from the cushion and other components of the helmet (21). A second conveyor belt (8) is operatively connected to the separation mechanism (7), and is used to transport helmet components (e.g., the helmet shell, helmet cushion and other helmet waste components). In addition, an optional identification mechanism (122) may be installed at the upstream end (102) of the first conveyor belt (1) to collect helmet data. A control system (124) is operatively connected to the chin strap disassembly station (2), liner disassembly station (3), adjuster disassembly station (4), rivet disassembly station (5), identification mechanism (122), safety sensor(s) (19), cutting mechanism (116), pressing mechanism (1198), pushing mechanism (120), etc. via either wired or wireless connections (see, for example, the dashed lines in Fig. 1).

The first manipulator (106) is provided with a first grabber (126) that may grab the helmet (21) for the chin strap(s) to hang and cut with the cutter (128). Alternatively, the first grabber (126) may grab the chin strap(s). Cutting the chin straps from the helmet (21) exposes the helmet's edges so that the cushion and other helmet components are accessible. The second manipulator (108) contains a second grabber (130), which disassembles the helmet's liner which is typically attached to the inner (i.e., concave) part of the helmet. with Velcro (hook and loop fastener) tapes. The second grabber (130) separates the liner from the helmet (21).

The third manipulator (110) affixed to the adjuster disassembly station (4) contains a third grabber (132), for disassembling and separating the helmet adjusters from the helmet (21). The fourth manipulator (112) at the rivet disassembly station (5) nmay further contain a fourth grabber (134) that grabs helmets and a cutter (128) that cuts any helmet rivets. If the identification mechanism (if present) fails to detect any helmet rivets on that helmet (21), then the rivet disassembly station (5) may remain idle as the helmet (21) passes by on the first conveyor belt (1).

An embodiment of the disassembly mechanism (6) contains a frame (9), a disassembly platform (10) in the middle of the frame (9), a loading end (114) on one side of the disassembly platform (10), and an unloading end (138) on another side of the disassembly platform (10). The disassembly mechanism (6) further contains a cutting mechanism (116), a pressing mechanism (118) and a pushing mechanism (120). Once helmets are placed on the disassembly platform (10), a first hydraulic cylinder (13) drives the connecting rack (14) to vertically move the connecting rack (14) and the attached blade(s) (15) down to cut the helmet (21) resting on; or secured on, the disassembly platform (10). After cutting the helmet, the second hydraulic cylinder (16) drives the press plate (17) to move down and press the top of helmet (21) to break it into smaller pieces and separate the helmet components (154). The pushing mechanism (120) then pushes the helmet components (154) towards the unloading end (138).

It can be seen in the figures that the cutting mechanism (116) includes a first hydraulic cylinder (13), connecting rack (14) and several blades (15). The first hydraulic cylinder (13) is set at the top portion of the frame (9) and the output end of the first hydraulic cylinder (13) is perpendicular to the disassembly platform (10). The connecting rack (14) is fixed at the output end (140)N of the first hydraulic cylinder (13), while the blades (15) are fitted at the bottom portion of the connecting rack (14).

Furthermore, the pressing mechanism (118) includes a second hydraulic cylinder (16) and press plate (17). The second hydraulic cylinder (16) is affixed to the connecting rack (14), and the output end (140) of the second hydraulic cylinder (16) is also perpendicular to the disassembly platform (10). In an embodiment herein the first hydraulic cylinder (13) and the second hydraulic cylinder (16) are coaxial. The connecting rack (14) is provided with a connecting rack hole (144) for the press plate (17) to move through, and the press plate (17) is set at the output end of the second hydraulic cylinder (16). In an embodiment herein, the press plate (17) has a round shape.

The pushing mechanism (120) includes a pneumatic cylinder (11) and a push plate (12), with the pneumatic cylinder (11) fitted on one side of the disassembly platform (10) opposite the unloading end (138). The push plate (12) is affixed at the output end (140) of the pneumatic cylinder (11). As the output end (140) of the pneumatic cylinder (11) moves towards the unloading end (138), the push plate (12) moves helmet components (154) towards the unloading end (138) and, if present, towards the unloading chute (18).

In an embodiment herein, the first hydraulic cylinder (13) and the second hydraulic cylinder (16) are an oil-based hydraulic system, a water-based hydraulic system; or an oil-based hydraulic system, as it is believed that significant force is required to cut through and press the helmets to their breaking point. However, once broken into helmet components (154), an air-based pneumatic system is quick and easily adequate to move the helmet components (154) towards the unloading end (139).

The unloading end (138) may be is provided with an unloading chute (18), and the separation mechanism (7) is operatively connected to the unloading chute (18) to receive. broken helmet components (154). The equipment and systems relating to the hydraulic and pneumatic systems may be contained in the lower portion of the frame (9) and they may be controlled by the control system (124).

The loading end (114) is optionally provided with a safety sensor (19), which is operatively (either directly or indirectly) connected via, for example, communication wires or a wireless network (see, for example, the dashed lines in Fig. 1), to the control system (124) and/or the cutting mechanism (116), the pressing mechanism (118), the pushing mechanism (120), and/or the identification mechanism (122). The safety sensor (19) detects persons, obstructions and/or objects entering hazardous areas. Once it is triggered, the safety sensor (19) may transmit a signal to the control system (124) which may stop the cutting mechanism (116), the pressing mechanism (118) and/or the pushing mechanism (120). In an embodiment herein, the disassembly mechanism contains a plurality of safety sensors (19) such as on both sides of the loading end (114).

In an embodiment herein, the disassembly mechanism (6) contains a sliding or openable see-through window or such as an acrylic window, or door through which to observe the actions of the disassembly mechanism (6). Such a window or door should be sufficiently strong so as to resist cracking or breaking if helmet components hit it during the cutting and/or pressing processes as the disassembly process may be violent. In an embodiment herein, the window or door may be opened to place a helmet (21) onto the disassembly platform (10). In an embodiment herein, the safety sensor (19) ensures that the window and/or door is securely closed prior to operating the disassembly mechanism (6).

In Fig. 4, it can be seen that four blades (15) are uniformly distributed at the bottom portion of the connecting rack (14), with the blades (15) evenly arranged (i.e., at 90 degree angles) around the connecting rack hole (144). Each of the blades (15) contain a horizontal cutting edge (146) parallel to the disassembly platform (10) and an inclined cutting edge (148) running (radially) from the horizontal cutting edge (146) towards the connecting rack hole (144). In the figures, the disassembly platform (10) contains four slots (20) also arranged at 90 degree angles on the disassembly platform (10), corresponding to the four blades (15). Without intending to be limited by theory, it is believed that during use, the blades (15) contact with the upper and middle parts of a helmet (21) when it moves down, cutting the helmet (21) into four pieces from top to bottom, and subsequently making it easier to separate the helmet components such as the shell (typically a material such as expanded poly styrene) during pressing.

In an embodiment herein, the helmet (21) is placed on the disassembly platform (10) with the convex surface facing upwards. In another embodiment, the helmet (21) is placed on the disassembly platform (10) with the concave surface facing upwards. The disassembly platform (10) may therefor further contain a concave or a convex shaped form (156) to make such helmet (21) placement easier and/or reduce undesired helmet movement.

The separation mechanism (7) may contain a vertical mixer (150) such as a cyclone mixer found in bagless vacuums, which rotates broken helmets at a high speed to separate the helmet components (154) by density, for example, to separate the shells from the expanded poly styrene (EPS) cushion and other helmet components (154). Alternative embodiments include a separation mechanism employing a physical screening method, for example, size screening (e.g., with a drum separator), to separate the helmet components into similar raw materials. Combinations of various types and categories of separation mechanisms known in the art are also specifically contemplated herein.

The identification mechanism (122) may include a sensor, such as a visual sensor, to collect helmet data. The visual sensor herein may be a CCD (charge coupled device) such as commonly used in mobile phone cameras, or a more high resolution and/or faster visual sensor as needed. The identification mechanism (122) is typically set at the upstream end (102) of the first conveyor belt (1). The input end of the visual sensor (122) is positioned in the direction of the first conveyor belt (1) such that the helmet (21) is visible thereby so that the identification mechanism (122) can collect the helmet data. The identification mechanism (122) transmits the helmet data, such as the helmets' model, position, direction, etc. to the control system. The identification mechanism (122) and/or the control system (124) may further contain a database of known helmets so as to correlate and/or compare the helmet data with a specific helmet model, maker, materials, etc. The control system (124) may further reject a helmet (21) if it is found to be, for example, unknown, unidentifiable, and/or incompatible with the automated helmet disassembly device (100) and/or helmet recycling method herein. In an embodiment herein, the control system (124) may contain a machine learning and/or artificial intelligence algorithm to processes the helmet data collected by the identification mechanism (122), and may, for example, distinguish parts and/or helmets with or without rivets, and may control specific stations to disassemble helmets in a particular manner.

It should be understood that the above only illustrates and describes examples whereby the present invention may be carried out, and that modifications and/or alterations may be made thereto without departing from the spirit of the invention.

It should also be understood that certain features of the invention, which are, for clarity, described in the context of separate embodiments, may also be provided in combination in a single embodiment. Conversely, various features of the invention which are, for brevity, described in the context of a single embodiment, may also be provided separately, or in any suitable subcombination.

Any references cited herein are incorporated herein by reference in their entireties. However, such incorporation does not necessarily constitute an admission that they are available as prior art.

## Claims

1. An automated helmet disassembly device (100) comprising:
A. a first conveyor belt (1) comprising an upstream end (102) and a downstream end (104), wherein the downstream end (104) is distal to the upstream end (102):
i. a chin strap disassembly station (2) located towards the upstream end (102) of the first conveyor belt (1) to cut the chin strap of a helmet (21), wherein the chin strap disassembly station (2) comprises a first manipulator (106);
ii. a liner disassembly station (3) downstream from the chin strap disassembly station (2); wherein the liner disassembly station (3) comprises a second manipulator (108);
iii. an adjuster disassembly station (4) downstream from the liner disassembly station (3), wherein the adjuster disassembly station (4) comprises a third manipulator (110) to grab the helmet adjusters; and
iv. a rivet disassembly station (5) downstream of the adjuster disassembly station (4), wherein the rivet disassembly station (5) comprises a fourth manipulator (112) to separate rivets from helmets; and
B. an optional identification mechanism (122) installed at the upstream end (102) of the first conveyor belt (1), wherein the identification mechanism (122) collects helmet data;
C. a disassembly mechanism (6) downstream of the rivet disassembly station (5) comprising a loading end (114) at the downstream end (104) of the first conveyor belt (1), wherein the disassembly mechanism (6) comprises a cutting mechanism (116), a pressing mechanism (118) and a pushing mechanism (120);
D. a control system (124) operatively connected to and receiving helmet data from the chin strap disassembly station (2), the liner disassembly station (3), the adjuster disassembly station (4), the rivet disassembly station (5), the disassembly mechanism (6) and the identification mechanism (122); and
E. a separation mechanism (7) comprising a downstream end (140) arranged downstream of the disassembly mechanism, (6) wherein the separation mechanism (7) separates the helmet components (154); and
F. a second conveyor belt (8) downstream from the separation mechanism (7), wherein the second conveyor belt (8) transports helmet components (154) from the downstream end (104) of the separation mechanism (7);

2. The automated helmet disassembly device (100) according to Claim 1, wherein the first manipulator (106) comprises a first grabber (126) and a cutter (128), wherein the second manipulator (108) comprises a second grabber (130), the third manipulator (110) comprises a third grabber (132) and the fourth manipulator (112) comprises a fourth grabber (134) and a cutter (128).

3. The automated helmet disassembly device (100) according to any of Claims 1-2, wherein the disassembly mechanism (6) comprises:
A. a frame (9);
B. a disassembly platform (10) securely connected to the frame (9);
C. a loading end (114) at the upstream end (102) of the disassembly platform (10); and
D. an unloading end (138) at the downstream end (104) of the disassembly platform (10); and
wherein the cutting mechanism (116) comprises a first hydraulic cylinder (13), a connecting rack (14) comprising a blade (15); or a plurality of blades (15); or four blades (15), affixed to the lower end (142) thereof, wherein the first hydraulic cylinder (13) is affixed at the top of the frame (9), and wherein the output end (140) of the first hydraulic cylinder (13) is arranged perpendicular to the disassembly platform (10), wherein the connecting rack (14) is affixed to the output end (140) of the first hydraulic cylinder (13);
wherein the pressing mechanism (118) comprises a second hydraulic cylinder (16) affixed to the connecting rack (14) and a press plate (17), wherein the second hydraulic cylinder (16) is affixed to the connecting rack (14), and wherein the output end (140) of the second hydraulic cylinder (16) is arranged perpendicular to the disassembly platform (10), and comprises a press plate (17) at the output end (140) of the second hydraulic cylinder (16), wherein the connecting rack (14) comprises a connecting rack hole (144) through which the press plate (17) may move; and
wherein the pushing mechanism (120) comprises a pneumatic cylinder (11) and a push plate (12) affixed to the output end (140) of the pneumatic cylinder (11), wherein the pneumatic cylinder (11) is affixed to the disassembly platform (10) opposite the unloading end (138), and wherein the push plate (12) may push helmet fragments towards the unloading end (138).

4. The automated helmet disassembly device (100) according to Claim 3, **characterized in that**, the disassembly mechanism (6) comprises an unloading chute (18) at the unloading end (138), and wherein the separation mechanism (7) is operatively connected to the unloading chute (18).

5. The automated helmet disassembly device (100) according to any of Claims 3-4, further comprising a safety sensor (19) operatively connected to the cutting mechanism (116), the pressing mechanism (118) and the pushing mechanism (120) via the control system (124).

6. The automated helmet disassembly device (100) according to any of Claims 3-5, wherein the connecting rack (14) comprises four blades (15) arranged at 90 degree angles around the connecting rack hole (144) , wherein each blade comprises a horizontal cutting edge (146) distal from the connecting rack hole (144), and wherein each blade comprises an inclined cutting edge (148) aligned from the horizontal cutting edge (146) towards the connecting rack hole (144), and wherein the disassembly platform (10) comprises four slots (20) corresponding to the four blades (15).

7. The automated helmet disassembly device (100) according to any of Claims 1-6, wherein the separation mechanism (7) comprises a vertical mixer (150).

8. The automated helmet disassembly device (100) according to any of Claims 1-7, wherein the identification mechanism (122) comprises a visual sensor (152) aligned towards the first conveyor belt (1) and wherein the visual sensor (152) transmits helmet data to the control system (124).

9. A helmet recycling method for the automated helmet disassembly device (100) according to any of Claims 1-8, wherein the automated helmet disassembly device (100) comprises an identification mechanism (122), and therein the helmet recycling method comprises the steps of:
S1. placing a helmet (21) on a first conveyor belt (1) at the upstream end (102) of the first conveyor belt (1);
S2. collecting helmet data about the helmet (21) on the first conveyor belt (1) with the identification mechanism (122), and transmitting the helmet data to the control system (124);
S3. cutting any chin strap at the chin strap disassembly station (2);
S4. separating any liner at the liner disassembly station (3);
S5. separating any adjuster at the adjuster disassembly station (4);
S6. removing any rivets at the rivet disassembly station (5);
S7. placing the helmet (21) into the disassembly mechanism (6),
S7A cutting the helmet (21) with the cutting mechanism (116) into helmet pieces;
S7B pressing the helmet pieces with the pressing mechanism (118) to break the helmet pieces into helmet components (154); and
S7C pushing the helmet components (154) with the pushing mechanism (120) into the separation mechanism (7);
S8. rotating the helmet components in the separation mechanism (7) to separate the helmet components (154); and
S9. sorting the helmet components (154) on the second conveyor belt (8).

10. A disassembly mechanism (6) comprises a frame (9) comprising a disassembly platform (10) securely affixed to the middle portion of the frame (9), wherein a first hydraulic cylinder (13) is affixed to the upper portion of the frame (9), wherein the output end (140) of the first hydraulic cylinder (13) is aligned towards the disassembly platform (10), wherein the first hydraulic cylinder (13) is securely affixed to a connecting rack (14), wherein the connecting rack (14) comprises a blade (15); or a plurality of blades (15); or four blades (15), affixed to a bottom portion of the connecting rack (14),
wherein the connecting rack (14) further comprises a second hydraulic cylinder (16) affixed thereto, the second hydraulic cylinder (16) arranged below the first hydraulic cylinder (13), wherein the output end (140) of the second hydraulic cylinder (16) is aligned towards the disassembly platform (10), wherein the output end (140) of the second hydraulic cylinder (16) comprises a press plate (17), and wherein during use the press plate (17) may protrude from a connecting rack hole (144).

11. The disassembly mechanism (6) according to Claim 10, comprising four blades (15), wherein the four blades (15) are uniformly distributed at the bottom portion of the connecting rack (14), wherein the four blades (15) are affixed around the connecting rack hole (144), and wherein each blade comprises a horizontal cutting edge (146) distal from the connecting rack hole (144), and wherein each blade comprises an inclined cutting edge (148) aligned from the horizontal cutting edge (146) towards the connecting rack hole (144).

12. An automated helmet disassembly device comprising the disassembly mechanism according to any of Claims 10-11.

13. The disassembly mechanism (6) according to any of Claims 10-12, comprising a loading end (114), and an unloading end (138), wherein the loading end (114) and the unloading end (138) are spaced apart, the disassembly mechanism (6) further comprising a pushing mechanism (120) affixed to a pneumatic cylinder (11) opposite to the unloading end (138), and wherein the unloading end (138) comprises an unloading chute (18).

14. The disassembly mechanism (6) according to Claim 11, **characterized in that**, the disassembly platform (10) comprises four slots (20) corresponding to the four blades (15) and for the four blades (15) to pass therethrough.

15. The disassembly mechanism (6) according to Claim 13, wherein the loading end (114) comprises a safety sensor (19); or a plurality of safety sensors (19), and wherein the safety sensor (19) is operatively connected to the control system (124).
